# EUROPEAN PATENT APPLICATION

(11) **EP 2 407 896 A1**
(43) Date of publication of application: **18.01.2012**
(21) Application number: 10196029.2
(22) Date of filing: 20.12.2010
(51) Int. Cl.: G06F 17/30

(54) **Systems and methods of user interface for image display**

(30) Priority: 16.07.2010 US 364937 P
(71) Applicant: RESEARCH IN MOTION LIMITED, Waterloo, Ontario N2L 3W8 (CA)
(72) Inventor: Groux, Brian Roy, Waterloo Ontario N2L 3L3 (CA); Hardy, Michael Thomas, Waterloo Ontario N2L 3L3 (CA); Turcotte, Andrew James, Ottawa Ontario K2K 3K2 (CA)
(74) Representative: Phillips, Emily Elizabeth

(57) **Abstract**

Approaches to displaying image search results, and image content of computer readable media include providing a matrix display of images, with an interface to insert and remove floating date dividers, each indicative of a day on which one or more of the images was created. Available images can be abstracted according to a respective month in which the images were created, up to a determined maximum number of months, after which images are abstracted according to a year in which they were created. Selecting a month causes display of a matrix of images created during that month, while selecting a year causes display of a list of months. A selected thumbnail can be displayed for each month or year of a displayed list. Search results can grouped according to how each result satisfied the search criteria, such as a separate group for images that had names matching a search criteria, and one or more separate groups for images that satisfied a date range criteria.

## Description

### CROSS-REFERENCE TO RELATED APPLICATIONS

This application claims priority to U.S. Provisional Patent Application No. 61/364,937, filed on July 16, 2010, entitled "SYSTEMS AND METHODS OF USER INTERFACE FOR IMAGE DISPLAY", and which is incorporated herein by reference in its entirety for all purposes.

### BACKGROUND

### Field:

The present application relates to user interfaces for electronic devices, and more particularly to user interfaces relating to one or more of organizing, displaying, selecting and viewing images.

### Related art:

Images are stored digitally on electronic devices. Often, a user is tasked with creating a folder structure comprising a number of sub-folders in which files containing image data are to be organized. In many cases, such files are treated no differently than other files, in that the files can be ordered by creation date. Images can be viewed as thumbnails in a folder view, or as icons in some user interfaces.

### BRIEF DESCRIPTION OF THE DRAWINGS

Reference will now be made, by way of example, to the accompanying drawings which show example implementations of the present application, and in which:

Figure 1 depicts a functional block diagram of a device which can implement portions of this disclosure;

Figures 2, 3, 4, 5, 6, 7, 8, and 9 depict exemplary user interfaces according to aspects disclosed herein; and

Figures 10, 11, and 12 depict method aspects in which user interfaces according to figures 2-9 can be created.

### DESCRIPTION

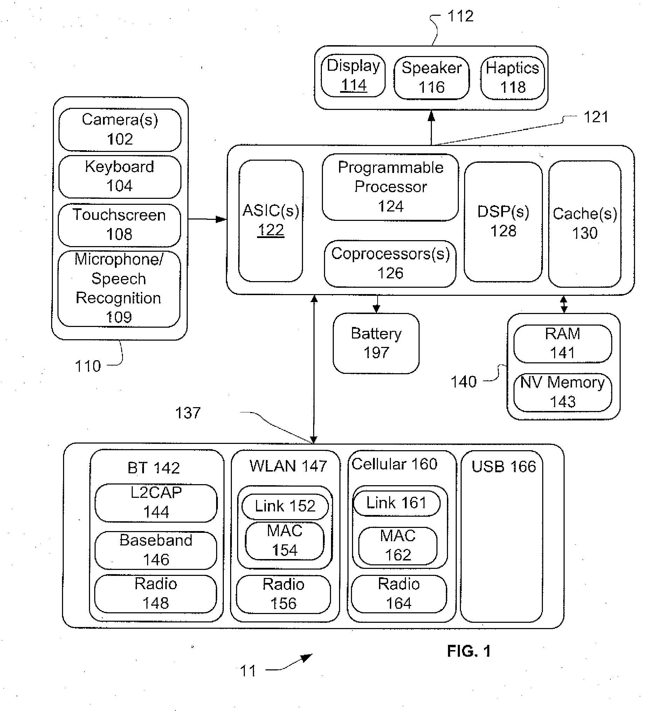

User interfaces for devices to access, view, and search for images and other non-textual information should be intuitive and easy to use. The following disclosure relates to user interfaces that can be used to display and interact with images (and other non-textual information) on electronic devices, such as a cell phone, a smart phone, a computer (as a generalization of a variety of computing platforms and form factors), and so on. Figure 1 depicts a block diagram of an example computing device in which disclosed aspects can be implemented.

Examples of disclosed techniques include segregating images according to a time period in which they were taken, even though they may be stored in a number of different physical or virtual locations on one or more computer readable media. For example, even though images may be located in a number of folders on a drive, one technique is to display a list of months in which images were created, such that a user can select a month, or months and be presented with a display of images taken during that time, even though those images may reside in a number of different folders.

Another exemplary technique includes providing a list of a number of months in which images are available to be viewed, and for older images, such as images taken in previous years, only a year icon can be displayed instead of month by month icons for newer images. In a matrix of images displayed, floating date separators can be used to separate images from other images taken on different dates.

User interfaces for presenting search results also can implement other exemplary disclosures herein. For example, images can be segregated or associated with a folders folders based on how a given image was found to match a search criteria. For example, if an image was named with a name that satisfied a search criteria, then that image can be placed in a folder for pictures that have had matching names, while if an image matches because it was in a folder that satisfied a search criteria, then that image can be placed or associated with a different folder than the folder containing images having matching names. Similarly, images can be matched based on a month, a year, or a month and year pattern entered as a search criteria. Results for such queries also can be presented as segregated into different folders based on how the images determined to satisfy a search criteria did so. For example, if an image was taken in a year that match the search criteria, then that image can be associated with a year matching folder, while if an image match both a month and meet your criteria than that image can be put in a separate folder from the image that matched only based on a year. Such association of images with folders can be done virtually, in a sense that images need not be moved, or copied to each folder with which they would be associated. Instead, an index can be maintained that associates each image with its folders. These exemplary aspects are described in more detail in the disclosure below with respect to the attached figures.

Figure 1 depicts example components that can be used in implementing a mobile device 11. Figure 1 depicts that a processing module 121 may be composed of a plurality of different processing elements, including one or more ASICs 122, a programmable processor 124, one or more co-processors 126, which each can be fixed function, reconfigurable or programmable, and one or more digital signal processors 128. For example, ASIC or co-processor 122 may be provided for implementing graphics functionality, encryption and decryption, audio filtering, and other such functions that often involve many repetitive, math-intensive steps. Processing module 121 can comprise memory to be used during processing, such as one or more cache memories 130.

Processing module 121 communicates with mass storage 140, which can be composed of a Random Access Memory 141 and of non-volatile memory 143. Non-volatile memory 143 can be implemented with one or more of Flash memory, PROM, EPROM, and so on. Non-volatile memory 143 can be implemented as flash memory, ferromagnetic, phase-change memory, and other non-volatile memory technologies. Non-volatile memory 143 also can store programs, device state, various user information, one or more operating systems, device configuration data, and other data that may need to be accessed persistently. A battery 197 can power device 11 occasionally, or in some cases, it can be a sole source of power. Battery 197 may be rechargeable.

User input interface 110 can comprise a plurality of different sources of user input, such as a camera 102, a keyboard 104, a touchscreen 108, and a microphone, which can provide input to speech recognition functionality 109. Output mechanisms 112 can include a display 114, a speaker 116 and haptics 118, for example. These output mechanisms 112 can be used to provide a variety of outputs that can be sensed by a human, in response to information provided from processing module 121.

Processing module 121 also can use a variety of network communication protocols, grouped for description purposes here into a communication module 137, which can include a Bluetooth communication stack 142, which comprises a L2CAP layer 144, a baseband 146 and a radio 148. Communications module 137 also can comprise a Wireless Local Area Network (147) interface, which comprises a link layer 152 with a MAC 154, and a radio 156. Communications module 137 also can comprise a cellular broadband data network interface 160, which in turn comprises a link layer 161, with a MAC 162. Cellular interface 160 also can comprise a radio 164 for an appropriate frequency spectrum. Communications module 137 also can comprise a USB interface 166, to provide wired data communication capability. Other wireless and wired communication technologies also can be provided, and this description is exemplary.

In the example interface as depicted in the figures, there are a variety of portions of the user interface allocated to display of different items, such as thumbnail images, or selectable representations of specific information. For example, an area representing images that were created during a given month can be displayed. For ease of explanation, these areas or other representations (which, in a touch-screen implementation can be selectable) are referred to as icons.

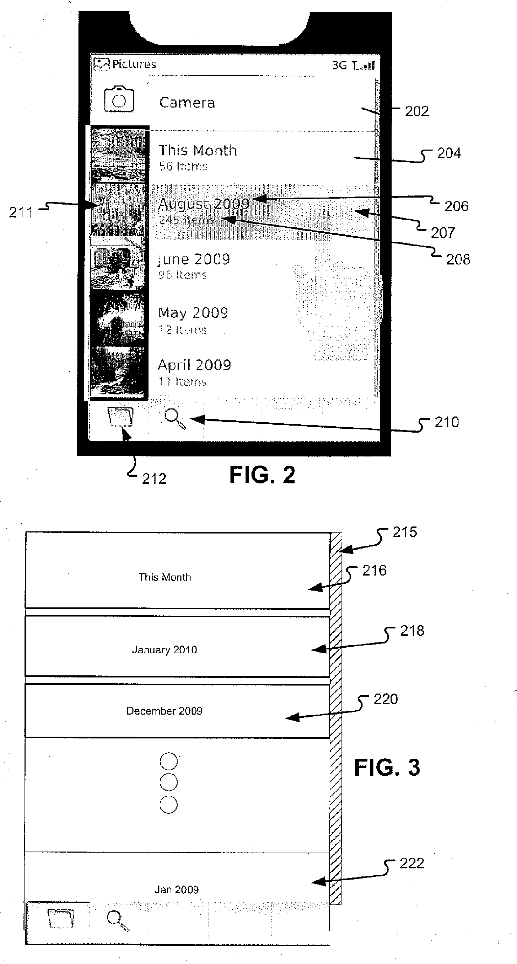

Figure 2 presents a first example interface for presenting or displaying availability of images on a device. In some implementations, the device can be a device with a relatively small display area, such that simplicity of the display is important for usability. For example, the device can be a smart phone with a touch interface, or with a keyboard interface, or both. More particularly, the interface depicted can include an icon allowing selection of a camera function (202), as well as a list of months in which images were created (or taken, or loaded onto the device, and so on). For example, the list can include items from a current month, which can always be labeled as a current month, as depicted "This Month" (204). Past months can be arranged chronologically below the "This Month" icon (204).

Examples of icons representing such prior months (or more generally time periods, as will be evident from disclosure presented below) include an icon representing images created during August 2009 (206). This icon for August 2009 currently is selected or available for selection as is evident by highlighting (207). Elements presented in icon (206) can include a thumbnail (211) of a representative image, and an indication (208) of a number of items that are available in (through) this representation (206). As will be explained herein, items can be organized into such a list based on when such items were created, regardless of which folders or on which physical media the data for such images is stored. The interface can include an icon (212) representative of a command to open a folder, as well as an icon (210) representative of a search function. The interface depicted in Figure 2 shows a list of months beginning from August 2009 and continuing to April 2009. As would be evident from this list, no images are available from July 2009, such that this month need not be represented in the list.

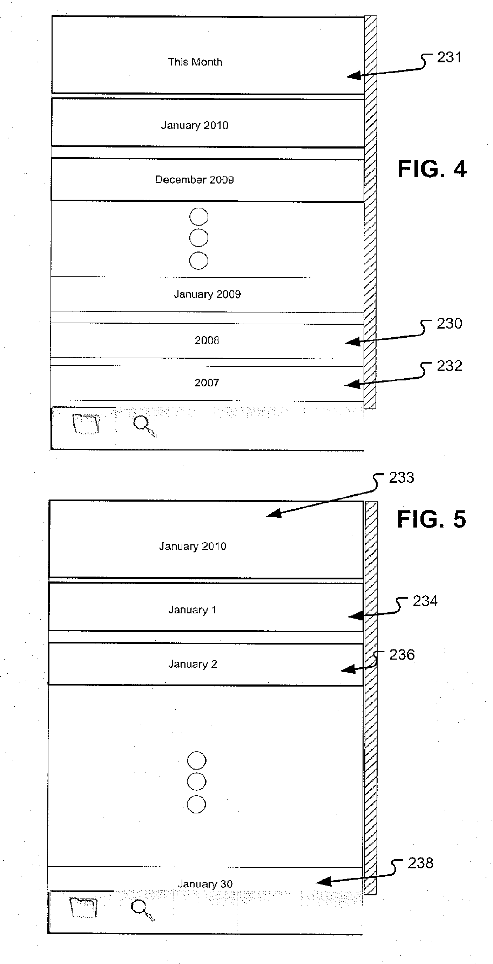

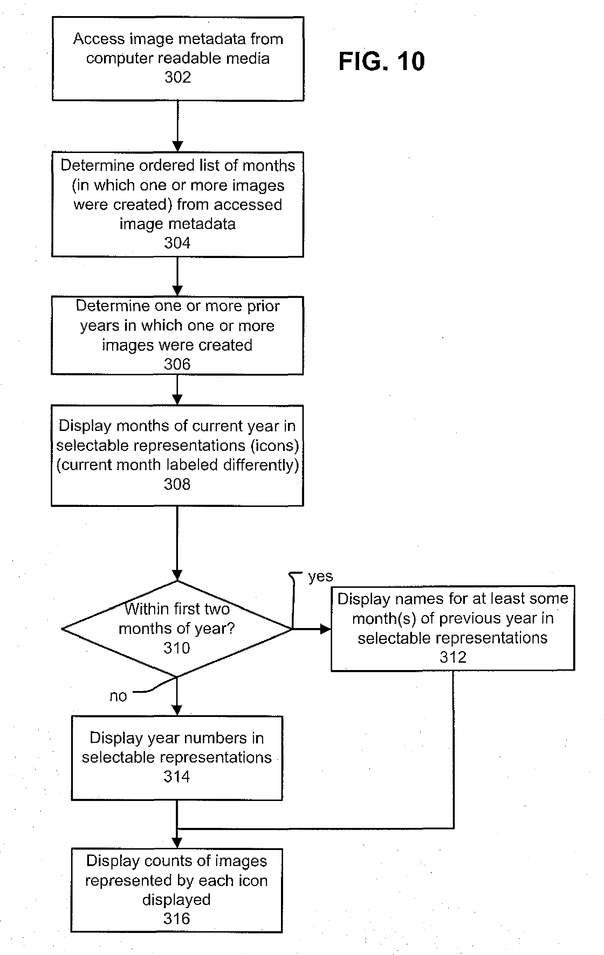

Further user interface aspects are described with respect to Figure 3. Figure 3 represents a situation in which a current month, again represented by an icon (216) labeled "this month", is within a preselected first number of months in the year, such as within the first two months of the year. For example, the current month can be February 2010. In such a circumstance, the user interface presents a list of months for the prior year as well, instead of representing the prior year as a single selectable representation, as will be exemplified by further figures discussed below. In particular, an icon for January 2010 (218) can be depicted, followed by an icon for December 2009 (220) and culminating with an icon for January 2009 (222). A scrollbar (215) can be disposed along a side of the depicted user interface. An example method for specifying the user interfaces depicted in Figures 2 and 3 is disclosed with respect to Figure 10, after introduction of Figure 4 which also is relevant to the method depicted in Figure 10.

Figure 4 is used to depict and disclose further exemplary aspects. In particular, for images created (accessed, or modified, in some implementations) in years previous, such years are not represented by lists of months in the year but rather can be represented by a single year icon. Icons representative of the years 2008 (230) and 2007 (232) exemplify icons that represent images created during the years 2008 and 2007, where a current time is subsequent to January 2010. A current month can be represented by an icon 231. Such icons can be ordered chronologically.

In Figure 10, the depicted method includes accessing image metadata from one or more computer readable media (302). For example, accessed metadata can include a creation or modification date of the image. Based on the accessed image metadata, a determination of an ordered list of months, such as months in which one or more images were created, is made (304). This ordered list of months can correspond with the lists depicted in Figures 2 and 3. The method depicted also can include determining one or more prior years in which images were created (306). Depending on how close to a previous year a current date is, the user interface that will be displayed can vary, as explained with respect to Figures 2, 3, and 4. In particular, it is contemplated that the months of the current year always will be displayed (or available for display, in the case that the display can not display all of them concurrently). However, in some implementations, if the current date is within a first two months (for example) of the year (310), then names for at least some (for example, all) of the months of the prior year will be available for display (312) on the user interface. This distinction is exemplified by reference to Figures 2 and 3. By contrast, year numbers, and not month and years, will be displayed for images created during years prior to the previous year in all instances, and for the previous year in instances where the current time is outside of a preset start of a year (for example, within the first two months). By particular example, if the current date were in May of 2010, then images taken in 2009 would be represented by an icon displaying only the year 2009 and not by separate month and year icons, as in Figure 2. The depicted method also displays counts of images represented by each displayed icon (316); this method aspect is depicted with respect to Figure 2, where for example there are 245 items available for display that were created during the month of August 2009.

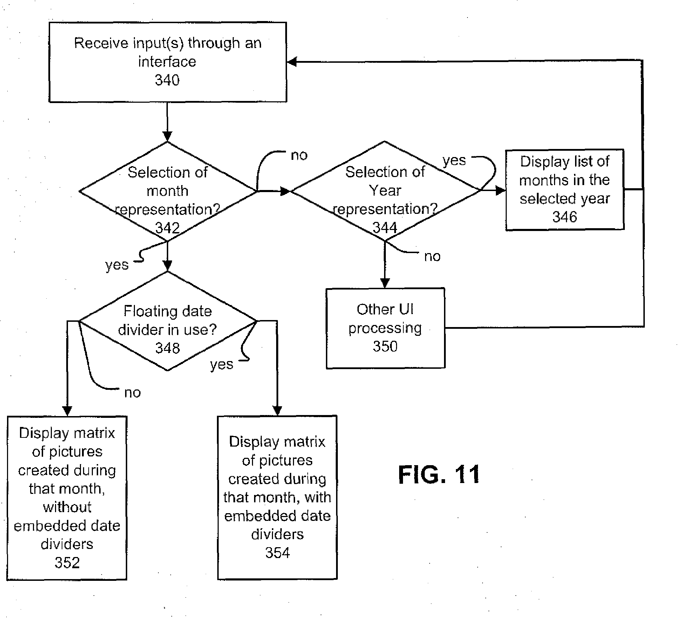

Figures 4 and 5 also are used in the context of describing a method according to the method depicted in Figure 11. Figure 5 depicts an example where a month icon January 2010 (218, depicted in Figure 3) was selected, resulting in display of a sequence of days in which images were created. For example, January 1 (234), January 2 (236), and January 30 (238) are depicted in Figure 5. A header (233) can be displayed at a top of the interface.

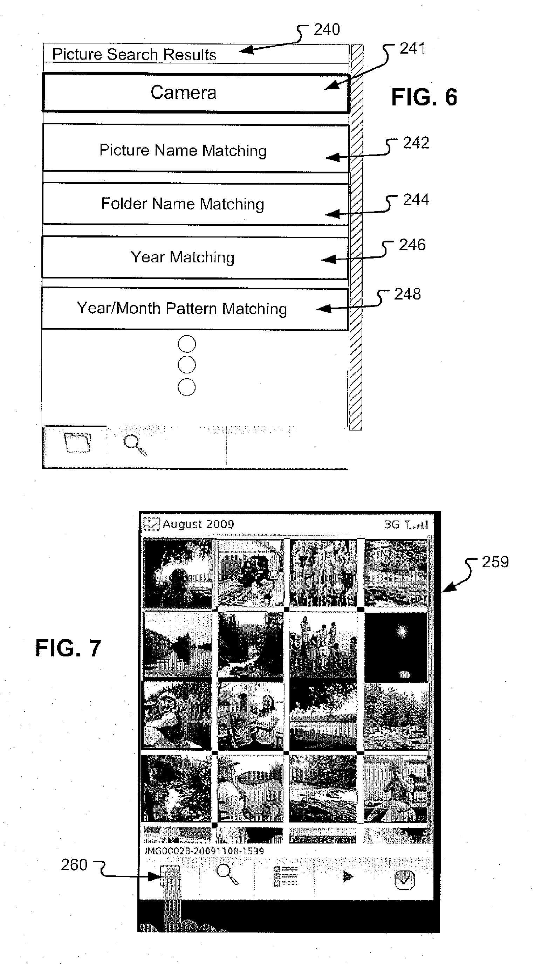

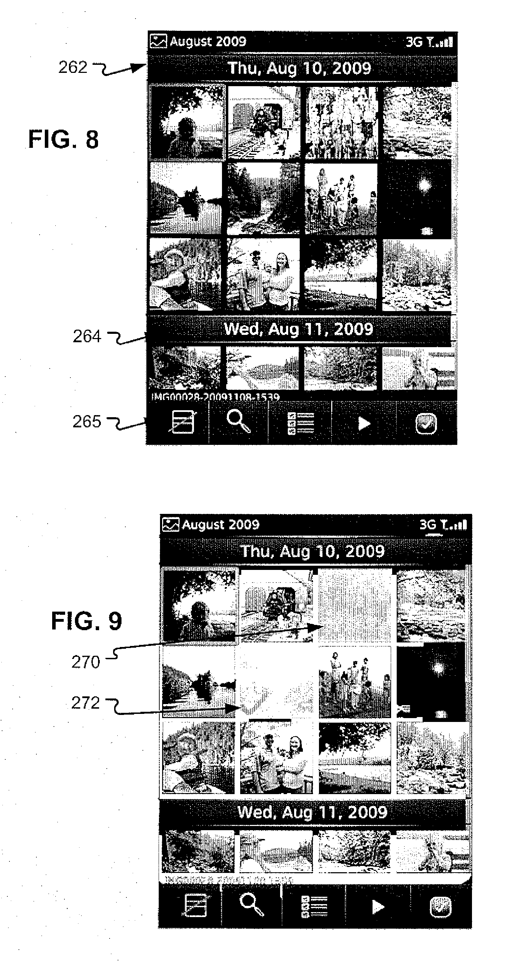

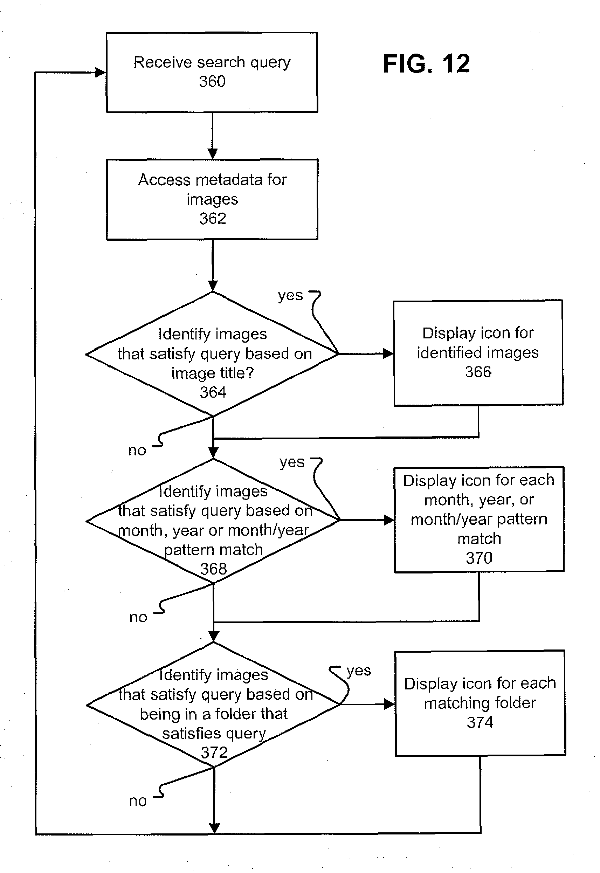

Figures 6, 7, 8, and 9 are used in describing further exemplary aspects of the disclosure. In particular, Figure 6 depicts a search results window, while Figures 7 and eight are used to depict the usage of floating date dividers. Figure 9 is used to disclose exemplary aspects of selecting particular images from a matrix of displayed images. Method aspects relating to these user interfaces are disclosed with respect to Figures 11 and 12.

Figure 6 depicts a picture search results interface (240). As with previously displayed interfaces an option to select a camera function (241) can be anchored at a top of the interface. Rather than display a sequence of images that have been found, for one or more reasons, to match a specified search criteria (such as a text string), the interface depicted in Figure 6 instead presents one or more folders in which images matching one or more elements of a search criteria are organized. For example, if a picture name matched a search criteria, then that picture would be available under a folder labeled as such (242). If folder in which a picture decided matched a text string use as a search criteria. Then images in that folder can be associated in made available under an icon representing that matching criteria (244). Similarly, if a year that an image was created matched a search criteria, then it can be associated in made available through a corresponding icon (246) and similarly for a year and month pattern matching folder 248. The examples presented with respect to Figure 6 are non-exhaustive, and other categories of ways in which metadata associated with images can be found to match a search criteria can be specified. As such, in some implementations, an image can be associated with multiple icons represented on an interface. For example, a given image can have a name as well as a year, matching the specified search criteria, and an image can be associated with icons for each such criteria element.

Figure 7 and 8 are used to disclose examples of display of a matrix of images (259), which can be optionally separated by floating date dividers. Figure 7 depicts that a selectable portion of the user interface (260) can be used to add or remove the floating date dividers. In Figure 7 floating date dividers are not yet inserted between images of the matrix. However, selecting user interface portion (260) causes display of such floating date dividers as depicted in Figure 8. One example floating date divider (262) indicates pictures taken on August 10, 2009. A second example floating date divider (264) demarcates pictures taken on August 10, 2009 from pictures taken on August 11, 2009. A user interface portion (265) can be used to reverse the display of the floating date dividers to return to the user interface depicted in Figure 7.

Figure 11 depicts an example method in which portions of the user interface to be displayed can be selected. Figure 11 depicts that the method can include receiving inputs through an interface (340). A decision is made as to whether the input represents a selection of a displayed month representation, such as month representation or icon (218, Figure 3). If the selection is a month representation, then a determination as to whether a floating date divider has been selected for use (348) is made. If floating date dividers have been selected than a matrix of pictures with such floating date dividers is displayed (354), as shown with respect to Figure 8. If floating date dividers were not selected, and are not active, then a matrix of pictures created during the selected month is displayed (352) without such date dividers. Returning to (342), if the input received was not a selection of the month representation, then a determination (344) is made as to whether that user input represents selection of a year icon. If so then a list of months in the selected year is displayed (346), and the method can return to receiving inputs (340). If the input received is not representative of the selection of a year icon, then other user interface processing, not pertinent to the present disclosure can be effected (350). Ultimately, the method can return again to receive inputs through the interface (340).

Figure 12 depicts an example method relevant to search disclosures. Figure 12 depicts that a search query can be received (360). Image metadata can be accessed (362), such as in response to receiving a search query. A determination or identification of images (364) that satisfy the received search query based on their file name or image title is made. If one or more such images are identified, then an icon, such as 244 of Figure 6, representative of that category would be added to the user interface that will be displayed. A determination or identification (360) also is made as to whether one or more images satisfy the search query based on a month, a year, or a month and year pattern match. If so, a respective icon can be displayed (determined to be displayed on a user interface) for each such way in which images were found to satisfy the query (referencing again. Figure 6). Still further, images can be determined to satisfy the query based on being in a folder that satisfies the search query (372). Responsively, an icon for such images can also be displayed (374) (determined to be displayed) (see Figure 6).

Figure 9 depicts an example of user interface that can display modifications to images responsive to their being selected. In one example, image can be displayed as slightly less opaque (e.g.. Slightly more transmissive of a background color) as depicted by the third picture in from the left of the first row, identified as 270. Another example is that a checkmark can be placed on a portion of an image selected as exemplified by the second picture in from the left in the second row with a, referenced by 272.

In the draft we refer to the search function as being able to display pictures by date, containing folder, date and name. Where as in actuality, the search is only bound by the data "fed" to it. If we added more meta data, for example a "person's name" tag, this too could become queryable and a new result category.

The above disclosure provides a variety of examples as to how searching and presentation of data elements can be provided, using the example of pictures. Further examples of such search functionality according to these disclosures includes other approaches to combining results and inferring search intent based on user input. For example, in one approach, a search for "Jan" would return a result category "Pictures taken in January". Another example is that a search for "2009" can return results identified as pictures taken in 2009. Similarly, search input of "Jan 9" or "2009 J" can be inferred as search criteria of a combined category search of "January 2009", responsive to which would be returned pictures taken in January 2009. Search results also can be broadened easily according to these disclosures. Using the "January 2009" example, by removing terms, such as the "9" or "2009" from this search would display just the month result.

As would be appreciated by those of ordinary skill in the art, these disclosed approaches can be applied to other categories of data and items, and is not implicitly limited to pictures and dates. These concepts also can be applied to music, for example, allowing inferential creation of separate artist, genre categories, but also that by querying "artist genre", for example, an implementation can return a list of songs in that specific genre by the specified artist. For example, a search term "bon" could return a "Songs by Bon Jovi" category, and the term "Ro" could return a "Rock Songs" category, and combining the terms "bon ro" the search could return a "Rock songs by Bon Jovi" category. It would be understand that these disclosures are exemplary and those of ordinary skill would be able to adapt them to a particular implementation.

Mobile devices are increasingly used for communication, such as voice calling and data exchange. Also, mobile devices increasingly can use a wider variety of networks for such communication. For example, a mobile device can have a broadband cellular radio and a local area wireless network radio. Additionally, the broadband cellular capability of a mobile device may itself support a variety of standards, or protocols that have different communication capabilities, such as GSM, GPRS, EDGE and LTE.

Further, some aspects may be disclosed with respect to only certain examples. However, such disclosures are not to be implied as requiring that such aspects be used only in implementations according to such examples.

An ordering of portions of depicted methods in the figures is for sake of convenience, and such ordering does not imply that such method portions must be conducted in the exemplary sequence, or that each method portion necessarily must be conducted in all methods and systems according to this disclosure. Actions described with respect to one figure may be taken or otherwise application or used with respect to actions described with respect to another figure, and no restriction is implied as to particular groupings of such actions.

The above description occasionally describes relative timing of events, signals, actions, and the like as occurring "when" another event, signal, action, or the like happens. Such description is not to be construed as requiring a concurrency or any absolute timing, unless otherwise indicated.

Certain adaptations and modifications of the described implementations can be made. Aspects that can be applied to various implementations may have been described with respect to only a portion of those implementations, for sake of clarity. However, it is to be understood that these aspects can be provided in or applied to other implementations as well. Therefore, the above discussed implementations are considered to be illustrative and not restrictive.

## Claims

1. A method, comprising:
accepting (360) a definition of a search query through an input interface;
comparing (362, 364, 368, 372) metadata associated with a plurality of images to identify images that meet the search query;
grouping (362, 364, 368, 372) the images into a plurality of groups, including a first group of images that have names that met the search query and a second group that met a time criteria specified in the search query; and
displaying (308, 366, 370, 374) an interface with selectable representations of the groups.

2. The method of claim 1, wherein the time criteria is detected (368) from the search query as text indicative of one or more of a month and a month and year.

3. The method of any one of claims 1-2, wherein the metadata compared comprises date information.

4. The method of any one of claims 1-3, wherein the displaying (308) further comprises displaying the selectable representations as selectable icons (e.g., 204, 206, 216, 218), each of the icons representing a month of an ordered list of months satisfying the time criteria.

5. The method of claim 4, wherein the ordered list of months is limited to a determined range of months (310), and images created outside of that range are represented by one or more icons indicating a respective year (314) in which each of those images was created.

6. The method of any one of claims 4-5, further comprising responsive to receiving a selection of one of the months, displaying a chronologically-ordered images (FIG. 8, FIG. 9)that were created in that month.

7. The method of claim 6, wherein the images are displayed in a matrix (FIG. 8, FIG. 9).

8. The method of claim 7, further comprising inserting (348) floating date dividers (264) in the matrix of images, each identifying a day on which one or more images of the matrix were created.

9. The method of claim 8, further comprising inserting and removing the date dividers responsive to receiving (260) respective inputs through the interface.

10. The method of any one of claims 1-9, further comprising displaying, with each displayed selectable representation, an indication (208) of a number of images represented by that icon.

11. The method of any one of claims 1-10, further comprising displaying, with each displayed selectable representation, a thumbnail image (211) selected from among the images represented by that representation.

12. A device, comprising:
a display (112);
a processor (121) coupled for outputting information on the display;
an interface (110) for receiving inputs; and
a computer readable medium (140) storing instructions for programming the processor to perform a method comprising
accepting (360) a definition of a search query through the interface;
comparing (362, 364, 368, 372) metadata associated with a plurality of images to identify images that meet the search query;
grouping (362, 364, 368, 372) the images into a plurality of groups, including a first group of images that have names that met the search query (242, 244) and a second group that met a time criteria specified in the search query (246, 248); and displaying on the interface selectable representations (216, 218, 220, 246, 242, 244) of the groups.

13. The device of claim 12, wherein the time criteria is detected from the search query as text indicative of one or more of a month and a month and year.

14. A computer readable medium storing instructions for configuring a device (11) to perform a method comprising:
determining (304, 308) each month (368, 370) within a determined number of months before a current month (231, 310) in which at least one image stored on the device was created;
for each image stored on the device that was created before the determined number of months, determining a year (306, 230, 232) in which that image was created;
displaying on a display (114), selectable representations for each month and each year (23 1);
responsive to receiving a selection (340) of any displayed month, displaying (352, 354) a matrix of pictures sorted chronologically; and
responsive to receiving (344) a selection of any displayed year, displaying (346) a list of months in that year in which images were created.

15. The computer readable medium of claim 14, wherein the instructions further are for separating (348) portions of the matrix of pictures with one or more floating day dividers (264), each indicating a day on which one or more of the images were created.

## Amended claims

### Amended claims in accordance with Rule 137(2) EPC.

**1.** A method, comprising:
accepting (360) a definition of a search query through an input interface;
comparing (362, 364, 368, 372) metadata comprising date information associated with a plurality of images to identify images that meet the search query;
grouping (362, 364, 368, 372) the images into a plurality of groups, including a first group of images that have names that met the search query and a second group that met a time criteria specified in the search query comprising of one or more of a month and a year;
displaying (308, 366, 370, 374) an interface with selectable representations of the groups of icons (204, 206, 216, 218), each of the icons representing a month of an ordered list of months satisfying the time criteria;
responsive to receiving a selection of one of the months, displaying a chronologically- ordered matrix of images that were created in that month; and
inserting (348) floating date dividers (264) in the matrix of images, each identifying a day on which one or more images of the matrix were created.

**2.** The method of claim 1, wherein the ordered list of months is limited to a determined range of months (310), and images created outside of that range are represented by one or more icons indicating a respective year (314) in which each of those images was created.

**3.** The method of any of claims 1-2, further comprising inserting and removing the date dividers responsive to receiving (260) respective inputs through the interface.

**4.** The method of any one of claims 1-3, further comprising displaying, with each displayed selectable representation, an indication (208) of a number of images represented by that icon.

**5.** The method of any one of claims 1-4, further comprising displaying, with each displayed selectable representation, a thumbnail image (211) selected from among the images represented by that representation.

**6.** A device, comprising:
a display (112);
a processor (121) coupled for outputting information on the display;
an interface (110) for receiving inputs; and
a computer readable medium (140) storing instructions for programming the processor to perform a method comprising
accepting (360) a definition of a search query through the interface; comparing (362, 364, 368, 372) metadata comprising date information associated with a plurality of images to identify images that meet the search query;
grouping (362, 364, 368, 372) the images into a plurality of groups, including a first group of images that have names that met the search query (242, 244) and a second group that met a time criteria specified in the search query (246, 248) comprising of one or more of a month and a year;
displaying on the interface selectable representations (216, 218, 220, 246, 242, 244) of the groups of icons (e.g., 204, 206, 216, 218), each of the icons representing a month of an ordered list of months satisfying the time criteria;
responsive to receiving a selection of one of the months, displaying a chronologically- ordered matrix of images that were created in that month; and
inserting (348) floating date dividers (264) in the matrix of images, each
identifying a day on which one or more images of the matrix were created.

**7.** A computer readable medium storing instructions for configuring a device (11) to perform a method comprising:
determining (304, 308) each month (368, 370) within a determined number of months before a current month (231, 310) in which at least one image stored on the device was created;
for each image stored on the device that was created before the determined number of months, determining a year (306, 230, 232) in which that image was created;
displaying on a display (114), selectable representations for each month and each year (231);
responsive to receiving a selection (340) of any displayed month, displaying (352, 354) a matrix of pictures sorted chronologically;
responsive to receiving (344) a selection of any displayed year, displaying (346) a list of months in that year in which images were created; and
inserting (348) floating date dividers (264) in the matrix of images, each identifying a day on which one or more images of the matrix were created.
